# EUROPEAN PATENT SPECIFICATION

(11) **EP 1 814 235 B1**
(45) Date of publication and mention of the grant of the patent: **17.10.2012**
(21) Application number: 06101073.2
(22) Date of filing: 31.01.2006
(51) Int. Cl.: H04B 1/38, H04M 1/60

(54) **Audio/Charging module and electronic system and portable electronic device thereof**
Audio-Lademodul und elektronisches System und entsprechendes tragbares elektronisches Gerät
Module audio/charge batterie et système électronique et dispositif électronique portable correspondant

(43) Date of publication of application: 01.08.2007
(73) Proprietor: HTC Corporation, Taoyuan County 330 (TW)
(72) Inventor: Wan-Hsith, Mr., Liu, Xindian City, Taipei County (TW)
(74) Representative: 2K Patentanwälte Blasberg Kewitz & Reichel

(56) References cited:
- EP-A- 1 134 958
- EP-A- 1 361 665
- US-A1- 2004 198 442

## Description

### BACKGROUND

The invention is related to an audio/charging module and, more particularly, to an audio/charging module in an electronic system which is capable of charging a portable electronic device via an audio signal line of an earphone jack.

An earphone jack is a standard connector receiving an earphone plug of audio receiving devices. A typical earphone jack has three signal lines, a first and second audio signal line and a ground voltage line. The first and second audio signal lines carry left and right audio channels.

An electronic system, such as a computer or digital music storage/processing system, can output audio via the two audio signal lines to an external device, such as an MP3 player or a Personal Digital Assistant (PDA). The two audio signal lines are connected to two audio output pins of an audio codec chip of the electronic system. The audio codec chip is used for converting digital audio signals to analog audio signals. The electronic system can also receive audio via the two audio signal lines from an external device. The two audio signal lines are then connected to two audio input pins of the audio codec chip of the electronic system. The audio codec chip here is used for converting analog audio signals to digital audio signals.

A portable electronic device with music storage/processing function typically has two earphone connectors for input and output of audio. Additionally a power connector is disposed on the portable electronic device for connecting to a power supply or charging the battery of the portable electronic device.

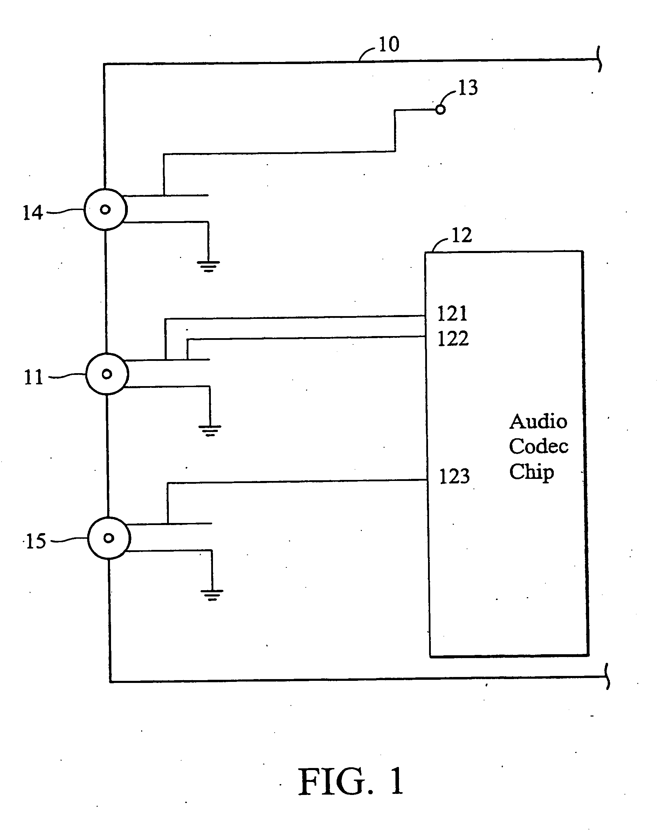

Fig. 1 is a block diagram of a conventional electronic system or portable electronic device 10 with music storage/processing function. The system comprises a power connector 14, an earphone connector 11, a microphone connector 15, an audio codec chip 12 and a charging power 13. The charging power 13 connects to the rechargeable battery when 10 is a portable electronic device, and connects to an internal power supply when 10 is an electronic system capable of charging an external device.

The power connector 14 connects to the charging power 13. The earphone connector and the microphone connector connect to the audio codec chip. Three connectors are required for audio input/output and charging functions.

Reducing device size is a demand in portable electronic device design. Connectors for external devices are required and occupy external space of the portable electronic device. Reducing the space required for the connectors is a major target in design of portable electronic devices.

EP A 1 139 958 A1, on which the preamble of claim 1 is based, discloses a mobile phone comprising a single jack. There are two connectors having different purposes that can be alternatively or simultaneously connected to the jack: a first connector is for use of the mobile phone when operated with free hands; a second connector, which can be plugged into the first connector, is for connection with an external charging device for charging a battery of the mobile phone.

The selective connecting either with the headset or with the external charging device is, however, accomplished directly by the mechanical engagement of the connector with contacts disposed within the jack of the mobile phone. A control unit and a switching unit, which is controlled by control signals of the control unit, are not disclosed. Operating the mobile phone either in the standard operation mode or in a charging mode requires, however, additional hardware, such as special connectors, which increases the costs and is complicated.

EP 1 361 665 A2 discloses an apparatus for supplying power to a mobile phone using an earphone-microphone connector. The earphone-microphone connector has additional contacts through which external power can be supplied to the mobile phone from an external power source. A control unit and a switching unit, which is controlled by control signals of the control unit, are not disclosed.

US 2004/0198442 A1 discloses a socket having multiple contact points which selectively enable establishing an electric connection with an charging device or standard operation of an electronic device. A control unit and a switching unit, which is controlled by control signals of the control unit, are not disclosed.

### SUMMARY

It is an object of the present invention to provide an audio/charging module for use in an electronic system enabling selective operation either in a standard operation mode or in a charging mode in a simple and cost-effective manner. According to a further related aspect of the present invention there is to be provided an audio/charging module for use in a portable electronic device enabling selective operation either in a standard operation mode or in a charging mode in a simple and cost-effective manner.

This problem is solved by an audio/charging module according to claim 1 for use in an electronic system, and by an audio/charging module according to claim 5 for use in a portable electronic device. Further advantageous embodiments are the subject-matter of the dependent claims.

Additional features and advantages of the invention will be set forth in part in the description which follows, and in part will be obvious from the description, or may be learned by practice of the invention. The features and advantages of the invention will be realized and attained by means of the elements and combinations particularly pointed out in the appended claims.

It is to be understood that both the foregoing general description and the following detailed description are exemplary and explanatory only and are not restrictive of the invention, as claimed.

### DESCRIPTION OF THE DRAWINGS

The accompanying drawings, which are incorporated in and constitute a part of this specification, illustrate embodiments of the invention and, together with the description, serve to explain the features, advantages, and principles of the invention.
Fig. 1 is a block diagram of a conventional electronic system or portable electronic device 10 with audio output/input function.
Figs. 2A, 3A, 4A and 5A are block diagrams of electronic systems or portable electronic devices according to embodiments of the invention.
Figs. 2B, 3B, 4B and 5B are embodiments of the audio/charging modules shown in Figs. 2A, 3A, 4A and 5A respectively.

### DETAILED DESCRIPTION

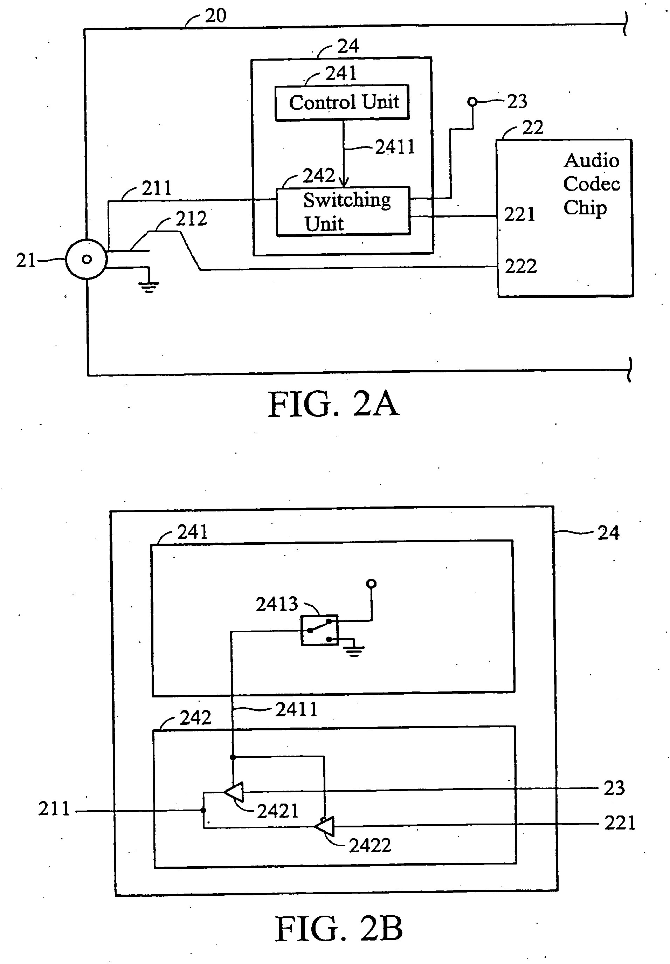

Fig. 2A is a block diagram of an electronic system 20 according to an embodiment of the invention. The electronic system 20 comprises an earphone jack 21, an audio codec chip 22, a charging power 23 and an audio/charging module 24.

In this embodiment, a first audio signal line 211 of the earphone jack 21 couples to a switching unit 242 of the audio/charging module 24. The switching unit 242 receives a charging control signal 2411 from a control unit 241 of an audio/charging module 24, and couples to an audio output pin 221 of the audio codec chip 22 and to the charging power 23. A second audio signal line 212 of the earphone jack 21 couples to an audio output pin 222 of the audio codec chip 22.

Fig. 2B is an embodiment of the audio/charging module 24 shown in Fig. 2A. A switching device 2413 controls the voltage level of the charging control signal 2411. The switching device 2413 can be implemented by using an electronic switch which can be controlled manually. The switching device 2413 can also be a part of a controller in the electronic system 20, programmable by registers (not shown) thereof to determine the voltage level of the signal..

As shown in this embodiment, when charging control signal 2411 is in a high state, buffer 2421 is ON and buffer 2422 is OFF, the first audio signal line 211 is coupled to charging power 23 and provides the charging power. When charging control signal 2411 is in a low state, buffer 2421 is OFF and buffer 2422 is ON, the first audio signal line 211 is coupled to the output pin 221 of the audio codec 22 and delivers audio signal.

In this embodiment, the high level of the charging control signal 2411 of the audio/charging module 24 indicates that the electronic system 20 is in a charging mode. When the system 20 operates in the charging mode, the audio/charging module 24 electrically couples the first audio signal line 211 to the charging power 23. When the system 20 is not in the charging mode, the first audio signal line 211 of the audio/charging module 24 is electrically coupled to the audio codec chip 22.

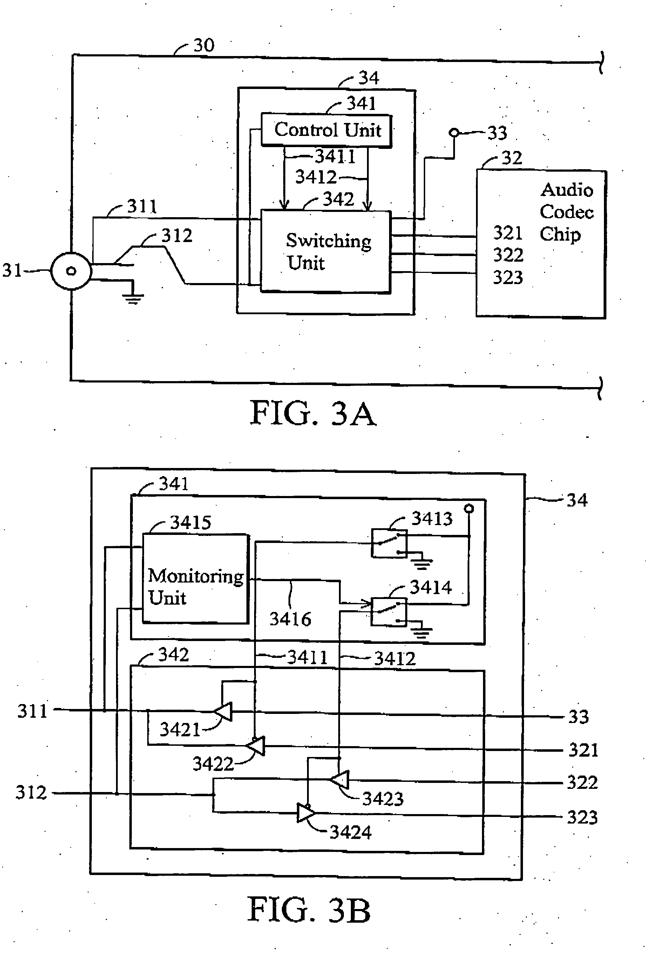

Fig. 3A is a block diagram of an electronic system 30 according to another embodiment of the invention. The electronic system 30 comprises an earphone jack 31, an audio codec chip 32, a charging power 33 and an audio/charging module 34.

In this embodiment, a first and a second audio signal lines 311 and 312 of the earphone jack 31 are coupled to a switching unit 342 of the audio/charging module 34. The switching unit 342 receives a charging control signal 3411 and a switching control signal 3412 from a control unit 341 of the audio/charging module 34, and further couples to audio output pins 321 and 322 of the audio codec chip 32, an audio input pin 323 and the charging power 33.

Fig. 3B is an embodiment of the audio/charging module 34 shown in Fig. 3A. Switching devices 3413 and 3414 control the voltage level of the charging control signal 3411 and the switching control signal 3412 respectively. The switching device 3413 and 3414 may be implemented by using an electronic switch which can be controlled manually. The switching device 3413 and 3414 can also be a part of a controller in the electronic system 30, programmable by registers (not shown) thereof to determine the voltage level of the charging control signal 3411 and the switching control signal 3412. In this embodiment, when charging control signal 3411 is in a high state, buffer 3421 is ON and buffer 3422 is OFF, first audio signal line 311 is connected to charging power 33 and provides the charging power. When charging control signal 3411 is in a low state, buffer 3421 is OFF and buffer 3422 is ON, first audio signal line 311 is connected to the output line 321 of the audio codec 32 and delivers audio.

When switching control signal 3412 is in a high state, buffer 3423 is ON and buffer 3424 is OFF, the second audio signal line 312 is connected to the audio output pin 322 of the audio codec chip 32 and outputs audio. When switching control signal 3412 is in a low state, buffer 3423 is OFF and buffer 3424 is ON, the second audio signal line 312 is connected to input pin 323 of the audio codec chip 32 and receives audio.

This embodiment further provides a monitoring unit 3415 coupled to the second audio signal line 312 and the switching device 3414 for an additional function. Monitoring unit 3415 is a waveform comparator comprising a waveform data storage device (memory), a counter, and a comparator. When the switching control signal 3412 is at a low level, i.e. the second audio signal line 312 is connected to the audio input pin 323 of the audio codec chip 32, monitoring unit 3415 compares a waveform on the second audio signal line 312 with a predetermined waveform in the memory. If the second audio signal line 312 matches the predetermined waveform , the monitoring unit 3415 directs the switching device 3414 to change state to high using signal 3416, and makes the second audio signal line 312 connect to the audio output pin 322 of the audio codec chip 32.

In this embodiment, the high level period of the charging control signal 3411 is regarded as a charging mode of the electronic system 30. When the system 30 is in the charging mode, the audio/charging module 34 electrically couples the first audio signal line 311 of the earphone jack 31 to the charging power 33. When the system 30 is not in the charging mode, the audio/charging module 34 electrically couples the first audio signal line 311 to the audio output pins 321 of the audio codec chip 32.

In this embodiment, the low level period of the switching control signal 3412 is also considered an input mode of the electronic system 30, wherein system 30 inputs audio from earphone jack 31. When the system 30 is in the input mode, the audio/charging module 34 electrically couples the second audio signal line 312 of the earphone jack 31 to the input pin 323 of the audio codec 32. When the system 30 is not in the input mode, the audio/charging module 34 electrically couples the second audio signal line 312 to the output pin 322 of the audio codec 32.

This embodiment is further capable of switching the electronic system 30 to leave the input mode when the electronic system 30 is in the input mode and the second audio signal line 312 receives a predetermined waveform, wherein system 30 then output music materials using earphone jack 31.

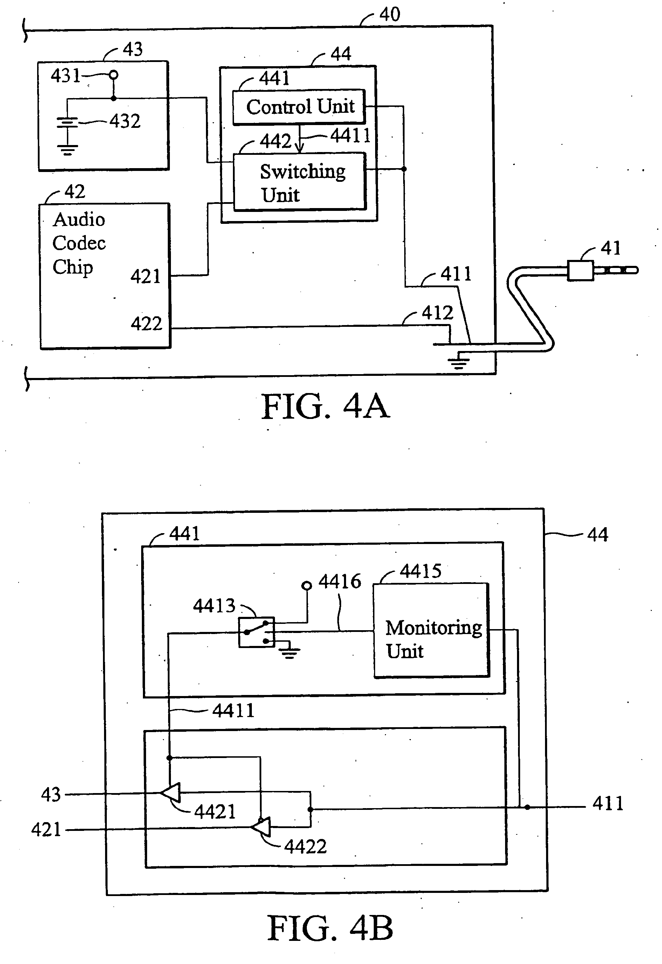

Fig. 4A is a block diagram of a portable electronic device 40 according to an embodiment of the invention. The portable electronic device 40 comprises an earphone plug interface 41, an audio codec chip 42, a charging module 43 and an audio/charging module 44. Charging module 43 comprises a battery 432 and a charging power 431, wherein battery 432 will be charged when charging power 431 is provided from an external device via earphone plug interface 41. The external device may be a device capable of providing power, such as electronic device 30 shown in Fig 3A in charging mode, or a DC power supply.

In this embodiment, a first audio signal line 411 of the earphone plug interface 41 couples to switching unit 442 of audio/charging module 44. The switching unit 442 receives a charging control signal 4411 from control unit 441 of audio/charging module 44, and couples to audio input pin 421 of the audio codec chip 42 and the charging module 43. Second audio signal line 412 couples to another audio input pin 422 of the audio codec chip 42.

Fig. 4B is an embodiment of the audio/charging module 44 shown in Fig. 4A. Switching device 4413 controls the voltage level of the charging control signal 4411. The switching device 4413 can be implemented using an electronic switch which can be controlled manually. The switching device 4413 can also be a part of a controller in the electronic system 40, programmable by registers (not shown) thereof to determine the voltage level of the signal. As shown in this embodiment, when the charging control signal 4411 is in a high state, a buffer 4421 is ON and a buffer 4422 is OFF, the first audio signal line 411 is connected to the charging module 43 for charging. When the charging control signal 4411 is in a low state, buffer 4421 is OFF and a buffer 4422 is ON, the first audio signal line 411 is connected to the input pin 421 of the audio codec 42 to receive audio materials.

In this embodiment, a monitoring unit 4415 coupled to the first audio signal line 411 and switching device 4413 is further provided for an additional function. The monitoring unit 4415 is a waveform comparator comprising a waveform data storage device (memory), a counter, and a comparator.. When charging control signal 4411 is at low level, i.e. the first audio signal line 441 is connected to the audio input pin 421 of the audio codec chip 42, the monitoring unit 4415 monitors if a waveform on the first audio signal line 411 is identical to a predetermined waveform in the waveform comparator. When the waveform on the first audio signal line 411 matches predetermined waveform, the monitoring unit 4415 directs the switching device 4413 to change state to high using signal 4416, and makes the first audio signal line 411 connect to the charging module 43.

In this embodiment, the high level period of the charging control signal 4411 of the audio/charging module 44 indicates a charging mode of the portable electronic device 40. When portable electronic device 40 is in the charging mode, the audio/charging module 44 electrically couples the first audio signal line 411 of the earphone plug interface 41 to the charging module 43. When the system 40 is not in the charging mode, the audio/charging module 44 electrically couples the first audio signal line 411 to the audio codec chip 42. This embodiment is further capable of switching the portable electronic device 40 to charging mode when the portable electronic device 40 is not in the charging mode and the first audio signal line 411 receives a predetermined waveform.

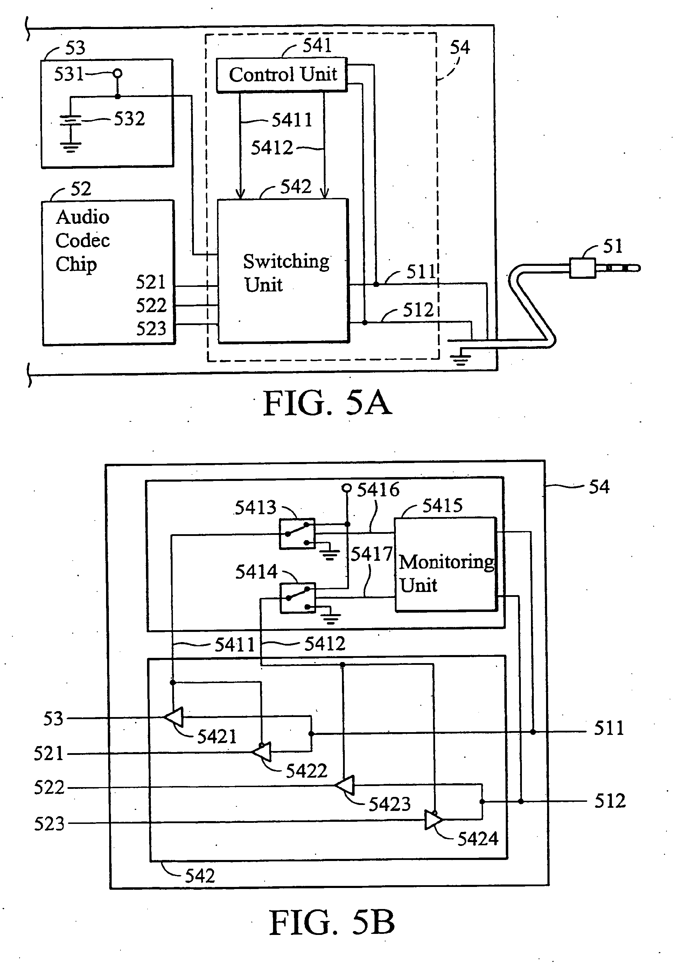

Fig. 5A is a block diagram of a portable electronic device 50 according to another embodiment of the invention. The portable electronic device 50 comprises an earphone plug interface 51, an audio codec chip 52, a charging module 53 and an audio/charging module 54. Charging module 53 comprises a battery 532 and a charging power 531, wherein battery 532 is charged when charging power 531 is provided from an external device via earphone plug interface 51. The external device may be a device capable of providing power, such as electronic device 30 shown in Fig 3A in charging mode, or a DC power supply.

In this embodiment, a first audio signal line 511 and second audio signal line 512 of the earphone plug interface 51 couples to a switching unit 542 and a control device 541 of the audio/charging module 54. The switching unit 542 receives a charging control signal 5411 and a switching control signal 5412 of control unit 541, and couples to audio input pin 521 and 522, output pin 523 and the charging module 53.

Fig. 5B is an embodiment of the audio/charging module 54 shown in Fig. 5A. Switching device 5413 and 5414 control the voltage level of the charging control signal 5411 and the switching control signal 5412 respectively. The switching device 5413 and 5414 may be implemented using an electronic switch which may be controlled manually by the user. The switching device 5413 and 5414 may also be implemented using a part of a controller of the portable electronic device 50, programmable by registers thereof (not shown) to determine the voltage level of the signal.

Shown in this embodiment, when charging control signal 5411 is in a high state, buffer 5421 is ON and buffer 5422 is OFF, and the first audio signal line 511 is connected to the charging module 53 for charging. When the charging control signal 5411 is at low level, buffer 5421 is OFF and a buffer 5422 is ON, the input pin 521 of the audio codec 52 is connected to the first audio signal line 511 to receive audio.

Also shown in this embodiment, when the switching control signal 5412 is in a high state, a buffer 5423 is ON and a buffer 5424 is OFF, the audio input pin 522 of the audio code chip 52is connected to the second audio signal line 512 to receive audio materials. When the switching control signal 5412 is in a low state, buffer 5423 is OFF and a buffer 5424 is ON, the output pin 523 of the audio codec 52 is connected to the second audio signal line 511 to output audio.

This embodiment further provides a monitoring unit 5415 coupled to the first audio signal line 511 and switching device 5413 to provide an additional function. The monitoring unit 5415 is a waveform comparator, which can be implemented by a waveform memory device, a counter and a comparator. When the charging control signal 5411 is at low level, i.e. the first audio signal 511 is coupled to the audio input pin 521 of the audio codec chip 52, the monitoring unit 5415 monitors if a waveform on the first audio signal line 5411 is identical to the predetermined waveform in the waveform memory device. When the waveform on the first audio signal line 5411 matches the predetermined waveform, the monitoring unit 5415 directs the switching device 5413 to change state to high using signal 5416, and makes first audio signal 511 connected to the charging module 53.

The monitoring unit 5415 is further coupled to the second audio signal line 512 and switching device 5414 to provide an additional function. When the switching control signal 5412 is at a high level, i.e. the second audio signal 512 is coupled to the audio input pin 522 of the audio codec chip 52, the monitoring unit 5415 monitors if a waveform received by the second audio signal line 512 is identical to the predetermined waveform in the waveform comparator. In the case where the waveform on the second audio signal line 512 matches the predetermined waveform, the monitoring unit 5415 directs the switching device 5414 to change state to low using signal 5417, and makes the second audio signal line 512 connected to the audio output pin 523 of the audio codec chip 52.

This embodiment considers the high level period of the charging control signal 5411 as a charging mode of the portable electronic device 50. When the system 50 is in the charging mode, the audio/charging module 54 electrically couples the first audio signal line 511 of the earphone plug interface 51 to the charging module 53. When the system 50 is not in the charging mode, the audio/charging module 54 electrically couples the first audio signal line 511 to the audio codec chip 52. This embodiment is further capable of switching the portable electronic device 50 to operate in the charging mode when the portable electronic device 50 is not in the charging mode and the first audio signal line 511 receives a predetermined waveform.

In this embodiment, the high level period of the switching control signal 5412 is also considered to be an input mode of the portable electronic device 50. When the system 50 is in the input mode, the audio/charging module 54 electrically couples the second audio signal line 512 of the earphone plug interface 51 to the input pin 522 of the audio codec 52. When the system 50 is not in the input mode, the audio/charging module 54 electrically couples the second audio signal line 512 to the output pin 523 of the audio codec 52. This embodiment is further capable of switching the portable electronic device 50 to leave the input mode when the portable electronic device 50 is in the input mode and the second audio signal line 512 receives a predetermined waveform.

The invention discloses a device charging and inputting an electronic system or a portable electronic device through an earphone plug, thereby reducing circuitry complexity, manufacturing cost, and device dimension.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims.

## Claims

1. An audio/charging module (24; 34) for use in an electronic system (20; 30), **characterized in** comprising:
a control unit (241; 341) for generating a charging control signal (2411; 3411) having a first state and a second state; and
a switching unit (242; 342) receiving the charging control signal (2411; 3411); wherein
the switching unit (242; 342) electrically couples a first audio signal line (211; 311) of an earphone jack (21; 31) of the electronic system (20; 30) to a charging power (23; 33) when the charging control signal (2411; 3411) is in the first state, and, when the charging control signal (2411; 3411) is in the second state, the switching unit (242; 342) electrically couples the first audio signal line (211; 311) to an audio codec chip (22; 32) of the electronic system (20; 30).

2. The audio/charging module as claimed in claim 1, allowing the electronic system (20) to charge a portable electronic device coupled to the earphone jack (21) of the electronic system (20; 30) when the charging control signal (2411) is in the first state, and prohibiting the electronic system (20) from charging the portable electronic device when the charging control signal (2411) is in the second state.

3. The audio/charging module as claimed in claim 1, wherein:
the control unit (341) further generates a switching control signal (3412) having the first state and the second state; and
the switching unit (342) electrically couples a second audio signal line (312) of the earphone jack (31) to an output pin (322) of the audio codec chip (32) when the switching control signal (3412) is in the first state, and to an input pin (323) of the audio codec chip (32) when the switching control signal (3412) is in the second state.

4. The audio/charging module as claimed in claim 3, wherein the control unit (341) further couples to the second audio signal line (312); wherein in the case where the switching control signal (3412) is in the second state, the control unit (341) sets the switching control signal (3412) to the first state when detecting a predetermined waveform on the second audio signal line (312).

5. An audio/charging module (44; 54) for use in a portable electronic device (40; 50) **characterized in** comprising:
a control unit (441; 541) generating a charging control signal (4411; 5411) having a first state and a second state, setting the charging control signal (4411; 5411) as the first state to charge the portable electronic device (40; 50) by an electronic system coupled to an earphone plug interface (41; 51) of the portable electronic device (40; 50), and setting the charging control signal (4411; 5411) as the second state to set the portable electronic device (40; 50) not to be charged by the electronic system; and
a switching unit (442; 542) receiving the charging control signal (4411; 5411); wherein
the switching unit (442; 542) electrically couples a first audio signal line (411; 511) of the earphone plug interface (41; 51) to a charging module (43; 53) of the portable electronic device (40; 50) when the charging control signal (4411; 5411) is in the first state, and, when the charging control signal (4411; 5411) is in the second state, the switching unit (442; 542) electrically couples the first audio signal line (411; 511) to a first input pin (421; 521) of an audio codec chip (42; 52) of the portable electronic device (40; 50).

6. The audio/charging module as claimed in claim 5, wherein the control unit (414; 541) further couples to the first audio signal line (411; 511); wherein in the case where the charging control signal (4411; 5411) is in the second state, the control unit (441; 541) sets the charging control signal (4411; 5411) to the first state when detecting a predetermined signal on the first audio signal line (411; 511).

7. The audio/charging module as claimed in claim 5, wherein:
the control unit (541) further generates a switching control signal (5412) having the first state and the second state; and
the switching unit (542) electrically couples a second audio signal line (512) of the earphone plug interface (51) to a second input pin (522) of the audio codec chip (52) when the switching control signal (5412) is in the first state, and to an output pin (523) of the audio codec chip (52) when the switching control signal (5412) is in the second state.

8. The audio/charging module as claimed in claim 7, wherein the control unit (541) further couples to the second audio signal line (512); wherein in the case where the switching control signal (5412) is in the first state, the control unit (541) sets the switching control signal (5412) to the second state when detecting a predetermined signal on the second audio signal line (512).

9. An electronic system (20; 30) comprising an earphone jack (21; 31) and the audio/charging module as claimed in claim 1 or 2, wherein the control unit (241; 341) sets the charging control signal (2411; 3411) to the first state when the electronic system (20; 30) is in a charging mode, and sets the charging control signal (2411; 3411) to the second state when the electronic system (20; 30) is not in the charging mode.

10. An electronic system (30) comprising an earphone jack (31) and the audio/charging module as claimed in claim 3 or 4, further being capable of being operated in an input mode, wherein the control unit (341) sets the switching control signal (3412) to the second state when the electronic system (30) is in the input mode, and sets the switching control signal (3412) to the first state when the electronic system (30) is not in the input mode

11. A portable electronic device (40; 50) comprising an earphone plug interface (41; 51), an audio codec chip (42; 52) and the audio/charging module (44; 54) as claimed in claim 5 or 6, wherein the control unit (441; 541) sets the charging control signal (4411; 5411) to the first state when the portable electronic device (40; 50) is in a charging mode, and sets the charging control signal (4411; 5411) to the second state when the portable electronic device (40; 50) is not in the charging mode.

12. A portable electronic device (50) comprising an earphone plug interface (41; 51), an audio codec chip (52) and the audio/charging module (54) as claimed in claim 7 or 8, further being capable of being operated in an input mode, wherein the control unit (541) sets the switching control signal (5412) to the first state when the portable electronic device (50) is in the input mode, and sets the switching control signal (5412) to the second state when the portable electronic device (50) is not in the input mode.

## Patentansprüche

1. Audio-/Lade-Modul (24; 34) zur Verwendung in einem elektronischen System (20; 30), **gekennzeichnet durch**:
eine Steuereinheit (241; 341) zum Erzeugen eines Ladesteuersignals (2411; 3411) mit einem ersten Zustand und einen zweiten Zustand; und
eine Schalteinheit (242; 342) zum Empfangen des Ladesteuersignals (2411; 3411);
wobei
die Schalteinheit (242; 342) ein erstes Audiosignal (211; 311) einer Ohrhörerbuchse (21; 31) des elektronischen Systems (20; 30) mit einer Ladeleistung (23; 33) elektrisch koppelt, wenn das Ladesteuersignal (2411; 3411) in dem ersten Zustand ist, und, wenn das Ladesteuersignal (2411; 3411) in dem zweiten Zustand ist, die Schalteinheit (342;242) das erste Audiosignal (211; 311) auf einen Audio-Codec-Chip (22; 32) des elektronischen Systems (20; 30) elektrisch koppelt.

2. Audio-/Lade-Modul nach Anspruch 1, welcher dem elektronischen System (20) ermöglicht, ein tragbares elektronisches Gerät, das mit der Ohrhörerbuchse (21) des elektronischen Systems (20; 30) gekoppelt ist, aufzuladen wenn das Ladesteuersignal (2411) in dem ersten Zustand ist, und verhindert, dass das elektronische System (20) das tragbare elektronische Gerät auflädt, wenn das Ladesteuersignal (2411) in dem zweiten Zustand ist.

3. Audio-/Lade-Modul nach Anspruch 1, wobei:
die Steuereinheit (341) ferner ein Schaltsteuersignal (3412) mit dem ersten und dem zweiten Zustand erzeugt; und
die Schalteinheit (342) eine zweite Audio-Signalleitung (312) der Ohrhörerbuchse (31) an einem Ausgangskontaktstift (322) des Audio-Codec-Chips (32) elektrisch koppelt, wenn das Schaltsteuersigbal (3412) in dem ersten Zustand ist, und mit einem Eingangskontaktstift (323) des Audio-Codec-Chips (32) elektrisch koppelt, wenn das Schaltsteuersignal (3412) in dem zweiten Zustand ist.

4. Audio-/Lade-Modul nach Anspruch 3, wobei die Steuereinheit (341) weiterhin mit der zweiten Audio-Signalleitung (312) verbindet; wobei für den Fall, dass das Schaltsteuersignal (3412) in dem zweiten Zustand ist, die Steuereinheit (341) das Schaltsteuersignal (3412) in den ersten Zustand setzt, wenn ein vorbestimmtes Signal auf der zweiten Audio-Signalleitung (312) festgestellt wird.

5. Audio-/Lade-Modul (44; 54) zur Verwendung in einem tragbaren elektronischen Gerät (40; 50), **gekennzeichnet durch**:
eine Steuereinheit (441; 541), die ein Ladesteuersignal (4411; 5411) mit einem ersten Zustand und einem zweiten Zustand erzeugt, das Ladesteuersignal (4411; 5411) in den ersten Zustand setzt, um das tragbare elektronische Gerät (40; 50) mit Hilfe eines elektronischen Systems aufzuladen, das an eine Ohrhörer-Stecker-Schnittstelle (41; 51) des tragbaren elektronischen Geräts (40; 50) gekoppelt ist, und das Ladesteuersignal (4411; 5411) in den zweiten Zustand setzt, um zu bewirken, dass das tragbare elektronische Gerät (40; 50) nicht durch das elektronische System aufgeladen wird; und
eine Schalteinheit (442; 542), die das Ladesteuersignal (4411; 5411) empfängt; wobei
die Schalteinheit (442; 542) elektrisch mit einer ersten Audiosignalleitung (411; 511) des Ohrhörer-Stecker-Schnittstelle (41; 51) mit einem Auflade-Modul (43, 53) des tragbaren elektronischen Geräts (40; 50) verbindet, wenn das Ladesteuersignal (4411; 5411) in dem ersten Zustand ist, und die erste Audio-Signalleitung (411; 511) die Schalteinheit (442; 542) mit einem ersten Eingangs-Kontaktstift (421; 521) eines Audio-Codec-Chips (42; 52) des tragbaren elektronischen Geräts (40; 50) verbindet, wenn das Ladesteuersignal (4411; 5411) in dem zweiten Zustand ist.

6. Audio-/Lade-Modul nach Anspruch 5, wobei die Steuereinheit (414; 541) weiterhin mit dem ersten Audio-Signalleitung (411, 511), wobei in dem Fall, wo die Ladesteuersignal (4411; 5411) ist in der zweite Zustand, die Steuereinheit (441; 541) setzt den Ladesteuersignal (4411; 5411) in den ersten Zustand, wenn Erfassen eines vorbestimmten Signals auf dem ersten Audio-Signalleitung (411, 511).

7. Audio-/Lade-Modul nach Anspruch 5, wobei:
die Steuereinheit (541) weiterhin ein Schaltsteuersignal (5412) mit dem ersten und dem zweiten Zustand erzeugt; und
die Schalteinheit (542) mit einer zweiten Audio-Signalleitung (512) der Hörer-Stecker-Schnittstelle (51) mit einem zweiten Eingangs-Kontaktstift (522) des Audio-Codec-Chips (52) verbindet, wenn das Schaltsteuersignal (5412) in dem ersten Zustand ist, und mit einem Ausgangs-Kontaktstift (523) des Audio-Codec-Chips (52) verbindet, wenn das Schaltsteuersignal (5412) in dem zweiten Zustand ist.

8. Audio-/Lade-Modul nach Anspruch 7, wobei die Steuereinheit (541) weiterhin mit der zweiten Audio-Signalleitung (512) verbindet; wobei in dem Fall, dass das Schaltsteuersignal (5412) im ersten Zustand ist, die Steuerungseinheit (541) das Schaltsteuersignal (5412) in den zweiten Zustand setzt, wenn ein vorbestimmtes Signal auf der zweiten Audio-Signalleitung (512) festgestellt wird.

9. Elektronisches System (20; 30), umfassend eine Ohrhörerbuchse (21; 31) und das Audio-/Lademodul nach Anspruch 1 oder 2, wobei die Steuereinheit (241; 341) das Ladesteuersignal (2411; 3411) in den ersten Zustand setzt, wenn das elektronische System (20; 30) in einem Lademodus ist, und das Ladesteuersignal (2411; 3411) in den zweiten Zustand setzt, wenn das elektronische System (20; 30) nicht im Lademodus ist.

10. Elektronisches System (30), umfassend eine Ohrhörerbuchse (31) und das Audio-/Lademodul nach Anspruch 3 oder 4, wobei dieses außerdem in der Lage ist, in einem Eingabemodus betrieben zu werden, in welchem die Steuereinheit (341) das Schaltsteuersignal (3412) in den zweiten Zustand setzt, wenn das elektronische System (30) in dem Eingabemodus ist, und das Schaltsteuersignal (3412) in den ersten Zustand setzt, wenn das elektronische System (30) nicht im Eingabemodus ist.

11. Tragbares elektronisches Gerät (40; 50), umfassend eine Ohrhörer-Stecker-Schnittstelle (41; 51), einen Audio-Codec-Chip (42; 52) und das Audio-/Lade-Modul (44; 54) nach Anspruch 5 oder 6, wobei die Steuereinheit (441; 541) das Ladesteuersignal (4411; 5411) in den ersten Zustand setzt, wenn das tragbare elektronische Gerät (40; 50) in einem Lademodus ist, und das Ladesteuersignal (4411; 5411) in den zweiten Zustand setzt, wenn das tragbare elektronische Gerät (40, 50) nicht in dem Lademodus ist.

12. Tragbares elektronisches Gerät (50), umfassend eine Ohrhörer-Stecker-Schnittstelle (41; 51), einen Audio-Codec-Chip (52) und das Audio -/Lade-Modul (54) nach Anspruch 7 oder 8, welches ferner in der Lage ist, in einem Eingabemodus betrieben zu werden, in welchem die Steuereinheit (541) das Schaltsteuersignal (5412) in den ersten Zustand setzt, wenn das tragbare elektronische Gerät (50) in dem Eingabemodus betrieben wird, und das Schaltsteuersignal (5412) in den zweiten Zustand setzt, wenn das tragbare elektronische Gerät (50) nicht im Eingabemodus betrieben wird.

## Revendications

1. Un module audio/charge (24; 34) pour utilisation dans un système électronique (20; 30) **caractérisé en ce qu'**il comporte:
une unité de commande (241; 341) pour la génération d'un signal de commande de charge (2411; 3411) ayant un premier et un second état; et
une unité de commutation (242; 342) recevant le signal de commande de charge (2411; 3411); dans laquelle
l'unité de commutation (242; 342) effectue le couplage électrique d'un premier conducteur de signal audio (211; 311) d'une fiche d'écouteur (21; 31) du système électronique (20; 30) vers une alimentation de charge (23; 33) lorsque le signal de commande de charge (2411; 3411) est dans le premier état, et , lorsque le signal de commande de charge (2411; 3411) est dans le second état, l'unité de commutation (242; 342) effectue le couplage électrique du premier conducteur de signal audio (211; 311) vers une puce codec audio (22; 32) du système électronique (20; 30).

2. Le module audio/charge tel que revendiqué dans la revendication 1, permettant au système électronique (20) de recharge un dispositif électronique portable couplé connecté à la fiche d'écouteur (21) du système électronique (20; 30) lorsque le signal de commande de charge (2411) est dans le premier état, et empêchant le système électronique (20) de charger le dispositif électronique portable lorsque le signal de commande de charge (2411) est dans un second état.

3. Le module audio/charge tel que revendiqué dans la revendication 1, dans lequel:
l'unité de commande (341) génère en outre un signal de commande de commutation (3412) ayant le premier état et le second état; et
l'unité de commutation (342) effectue un couplage électrique d'un second conducteur de signal audio (312) de la fiche d'écouteur (31) vers une borne de sortie (322) de la puce codec audio (32) lorsque le signal de commande de commutation (3412) est dans le premier état, et vers une borne d'entrée (323) de la puce codec audio lorsque le signal de commande de commutation (3412) est dans le second état.

4. Le module audio/charge tel que revendiqué dans la revendication 3, dans lequel:
l'unité de commande (341) effectue en outre le couplage vers le second conducteur de signal audio (312); dans lequel, lorsque le signal de commande de commutation (3412) est dans le second état, l'unité de commande (341) fixe le signal de commande de commutation (3412) au premier état lors de la détection d'une onde de forme prédéterminée sur le second conducteur de signal audio (312).

5. Un module audio/charge (44; 54) pour une utilisation dans un dispositif électronique portable (40; 50) **caractérisé en ce qu'**il comporte:
une unité de commande (441; 541) pour la génération d'un signal de commande de charge (4411; 5411) ayant un premier et un second état; fixant le signal de commande de charge (4411; 5411) au premier état pour la charge du dispositif électronique portable (40; 50) par un système électronique couplé à une interface de connexion d'écouteurs (41; 51) du dispositif électronique portable (40; 50), et fixant le signal de commande de charge (4411; 5411) au second état pour configurer le dispositif électronique portable (40; 50) à ne pas être chargé par le système électronique; et
une unité de commutation (442; 542) recevant le signal de commande de charge (4411; 5411); dans laquelle
l'unité de commutation (442; 542) effectue le couplage électrique d'un premier conducteur de signal audio (411; 511) de l'interface de connexion d'écouteurs (41; 51) à un module de charge (43; 53) du dispositif électronique portable (40; 50) lorsque le signal de commande de charge (4411; 5411) est dans le premier état, et , lorsque le signal de commande de charge (4411; 5411) est dans le second état, l'unité de commutation (442; 542) effectue le couplage électrique du premier conducteur de signal audio (411; 511) vers une première borne d'entrée (421; 521) d'une codec audio (42; 52) du dispositif électronique portable (40; 50).

6. Le module audio/charge tel que revendiqué dans la revendication 5, dans lequel l'unité de commande (414; 541) effectue en outre un couplage vers le premier conducteur de signal audio (411; 511); dans lequel dans le cas où le signal de commande de charge (4411; 5411) est dans le second état, l'unité de commande (441; 541) fixe le signal de commande de charge (4411; 5411) au premier état lors de la détection d'un signal prédéterminé sur le premier conducteur de signal audio (411; 511).

7. Le module audio/charge tel que revendiqué dans la revendication 5, dans lequel
l'unité de commande (541) génère en outre un signal de commande de commutation (5412) ayant un premier et un second état; et
l'unité de commutation (542) effectue un couplage électrique d'un second conducteur de signal audio (512) de l'interface de connexion d'écouteurs (51) avec une seconde borne d'entrée (522) de la puce codec audio (52), lorsque le signal de commande de commutation (5412) est dans le premier état, et avec une borne de sortie (523) de la puce codec audio (52) lorsque le signal de commande de commutation (5412) est dans le second état.

8. Le module audio/charge tel que revendiqué dans la revendication 7, dans lequel l'unité de commande (541) effectue en outre un couplage vers le second conducteur de signal audio (512); dans lequel, lorsque le signal de commande de commutation (5412) est dans le premier état, l'unité de commande (541) fixe le signal de commande de commutation (5412) au second état lors de la détection d'un signal prédéterminé sur le second conducteur de signal audio (512).

9. Un système électronique (20; 30) comportant un connecteur pour écouteurs (21; 31) et le module audio/charge tel que revendiqué dans les revendications 1 ou 2; dans lequel l'unité de commande (241; 341) fixe le signal de commande de charge (2411; 3411) au premier état lorsque le système électronique (20; 30) est dans un mode de charge, et fixe le signal de commande de charge (2411; 3411) au second état lorsque le système électronique (20, 30) n'est pas en mode de charge.

10. Un système électronique (30) comportant un connecteur pour écouteurs (31) et le module audio/charge tel que revendiqué dans les revendications 3 ou 4, pouvant de surcroît fonctionner en mode d'entrée, dans lequel l'unité de commande (341) fixe le signal de commande de commutation (3412) au second état lorsque le système électronique (30) est dans le mode d'entrée, et fixe le signal de commande de commutation (3412) dans le premier état lorsque le système électronique (30) n'est pas dans le mode d'entrée.

11. Un dispositif électronique portable (40; 50) comportant une interface de connexion d'écouteurs (41; 51), une puce codec audio (42; 52) et le module audio/charge (44; 54) tel que revendiqué dans les revendications 5 ou 6, dans lequel l'unité de commande (441; 541) fixe le signal de commande de charge (4411; 5411) au premier état lorsque le dispositif électronique portable (40; 50) est dans un mode de charge, et fixe le signal de commande de charge (4411; 5411) dans le second état lorsque le dispositif électronique portable (40; 50) n'est pas dans le mode de charge.

12. Un dispositif électronique portable (40; 50) comportant une interface de connexion d'écouteurs (41; 51), une puce codec audio (42; 52) et le module audio/charge (44; 54) tel que revendiqué dans les revendications 7 ou 8, pouvant en outre fonctionner dans un mode d'entrée, dans lequel l'unité de commande (541) fixe le signal de commande de commutation (5412) au premier état lorsque le dispositif électronique portable (50) est dans le mode d'entrée, et fixe le signal de commande de commutation (5412) dans le second état lorsque le dispositif électronique portable (50) n'est pas dans un mode d'entrée.
